(19) Europäisches Patentamt
European Patent Office
Office européen des brevets

(11) **EP 4 417 572 A1**

(12) **EUROPEAN PATENT APPLICATION**

(43) Date of publication:
**21.08.2024   Bulletin 2024/34**

(21) Application number: **23382137.0**

(22) Date of filing: **15.02.2023**

(51) International Patent Classification (IPC):
**C01B 3/04** (2006.01)     **B01D 53/047** (2006.01)
**B01J 4/00** (2006.01)      **B01J 19/00** (2006.01)
**B01J 23/46** (2006.01)     **C01B 3/56** (2006.01)

(52) Cooperative Patent Classification (CPC):
**C01B 3/047; B01D 53/047; B01J 4/004;**
**B01J 19/0053; C01B 3/56;** B01J 23/462;
C01B 2203/0277

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Sener Ingenieria Y Sistemas, S.A.**
**48930 Getxo (ES)**

(72) Inventors:
• **Enciso Ramos, Laura**
  **48930 Getxo (ES)**
• **Llabrés Veguillas, Javier**
  **48930 Getxo (ES)**

(74) Representative: **Clarke, Modet y Cía., S.L.**
**C/ Suero de Quiñones 34-36**
**28002 Madrid (ES)**

(54) **SYSTEM AND METHOD FOR AMMONIA CRACKING**

(57)    A method for ammonia cracking is disclosed. The method comprises the partial combustion and direct decomposition of ammonia directly on the catalyst in the same location and at the same time, thereby avoiding flame combustion. The control of a catalytic combustion is easier than a flame combustion and improves the control of the reaction by limiting the temperature and its variations.

Fig. 1

EP 4 417 572 A1

**Description**

The present invention relates to a method for ammonia cracking comprising the partial combustion and decomposition of ammonia directly on a non-nickel catalyst in the same location and at the same time (full catalytic reactions), thereby avoiding flame combustion with an oxygen distribution design and position. A pressure swing adsorption (PSA) hydrogen separation process and a catalytic combustion boiler for the off gases complete the process.

**TECHNICAL FIELD OF THE INVENTION**

The technical field to which the present invention belongs is that of ammonia cracking with the generation of hydrogen and nitrogen. The hydrogen produced is used as a source of energy or as raw material in industrial processes.

**STATE OF THE ART AND PROBLEMS TO BE SOLVED**

Ammonia ($NH_3$) cracking is used to obtain hydrogen. Interest in using hydrogen has been increasing over the past years as hydrogen can be used as a clean source of energy. Ammonia generates hydrogen and nitrogen in a ratio of 3 parts of hydrogen to 1 part of nitrogen. The state of the art for decomposing ammonia involves pre-heating ammonia stored in a bottle or tank in a heat exchanger and vaporizer. The vaporized ammonia is then transferred to a reactor where it is cracked.

Different systems and methods for ammonia autothermal cracking have been disclosed in the prior art.

WO2019038251A1 shows an autothermal cracker with two parts that are physically separated within the equipment. The first partition is an upper part (combustion chamber) where vaporized ammonia is mixed with oxygen to produce a flaming combustion. The temperature rises above 1000 °C and a large amount of nitrogen oxides (NOx) are formed. At this stage the combustion is partial as oxygen is supplied substoichiometrically compared to a total combustion reaction. The second partition of the reactor, located in the lower part of the unit, contains a catalytic bed with a nickel catalyst. The gases produced in the partial combustion flow down to the catalyst where the ammonia cracking reaction takes place, producing hydrogen. The heat required for this reaction, which is endothermic, is provided upstream by the partial combustion, carried out in the upper part of the unit, and transported by the very hot gases generated. The cracking equilibrium temperature is between 700 °C and 1100 °C, which is the temperature at which the nickel-based catalysts commonly used are active, more commonly above 800 °C.

The use of nickel-based catalysts in autothermal reactors as described in WO2019038251A1 results in a higher NOx production and lower hydrogen yield, as the reaction temperature needs to reach temperatures above 800°C and often above 1000°C. The higher the temperature, the more NOx are produced. Although there is a deNOx effect in the downstream catalyst where ammonia cracking takes place, the less NOx are produced in the upstream combustion, the better. Also, more oxygen is needed to keep the reaction temperature high, with its consequent associated cost, and more $NH_3$ is burnt, leaving less $NH_3$ for cracking and therefore less hydrogen generation, reducing the overall $NH_3$ cracking yield. In the present invention, a non-nickel-based catalyst having a higher activity than nickel, is used together with producing the combustion reaction in the same place and at the same time than the cracking reaction, all in said catalyst. Consequently, a lower overall temperature is needed, the amount of NOx produced is reduced and the hydrogen ($H_2$) yield is increased. Also, using a nickel-based catalyst in partial catalytic combustion applications could result in the formation of nickel oxides, thereby reducing performance. In the present invention, water is introduced in a certain amount in the reactor inlet which helps to control the temperature peak of the catalytic combustion. This also reduces the partial pressure of ammonia and products, helping to operate at higher pressures without affecting the thermodynamic equilibrium (the higher the pressure the more difficult to crack the ammonia as per Le *Chatelier* principle). Also, several oxygen injections are used in order to produce a more flat temperature profile along the bed, reducing the temperature peaks and the necessity for expensive metal alloys.

EP3693338A1 discloses an alcohol reforming system, from which the present invention is based. The invention relates to a system comprising an alcohol auto-thermal reforming unit for alcohol auto-thermal reforming and hydrogen production, a hydrogen separation unit and a boiler unit for combustion of hydrogen and combustible gases and a method for reforming alcohol and producing hydrogen. It is a high-pressure auto-thermal system comprising an auto-thermal reforming unit for alcohol, a hydrogen separation unit, and a boiler unit for combustion of hydrogen and combustible gases, characterized in that - the auto-thermal reforming unit is an adiabatic fixed bed reactor arranged in a cylindrical envelope of metal alloy, the reactor comprising a catalytic bed, an alcohol and steam inlet, an oxygen inlet, a non-return valve arranged in the oxygen inlet, a divergent nozzle with increasing size up to the diameter of the cylindrical envelope, wherein the autothermal reforming unit comprises a Venturi type mixing element and a distributor ring which doses the oxygen in the Venturi type mixing element or a lance creating a Venturi throat and - the boiler unit is an atmospheric water tube boiler with flame combustion where combustible gases are burned comprising coils for heat recovery and hydrogen permeable separation membranes wherein the membranes are integrated in the autothermal reforming unit or positioned between the auto-thermal reforming unit and the boiler unit.

There are differences between the present invention and the document EP3693338A1. The fist difference is about the nature of the fuel used. In EP3693338A1 only ethanol and methanol are disclosed while in the present invention ammonia is used. Also, a boiler based in atmospheric water tube boiler with flame combustion is disclosed. It is known that flue gases resulting from the hydrogen preparation process contain a very low heating value and will be very difficult to burn in a flame combustor. In the present invention this problem is solved by using a catalytic combustion device, that can burn such gases with the help of a catalyst.

Another important difference concerns the hydrogen separation technique, being based on hydrogen permeable membranes in EP3693338A1. In the present invention a PSA hydrogen separation system is disclosed which from an economical perspective is a more interesting solution, especially for large amounts of hydrogen produced. Also, the pressure at which the hydrogen is being produced is higher if using PSA. In EP3693338A1, the unreacted alcohol could be recycled back to the system through the recycle pump and is not separated from water. This could produce an alcohol enrichment in the recycled water, affecting the steam to carbon ratio and possibly causing problems of alcohol accumulation, temperature in reactor, soot generation in catalyst, etc. In the present invention, for big production units, a distillation operation is envisaged to separate the unreacted ammonia and recycle it, increasing the overall conversion. For small production units the water with unreacted ammonia is sent to the catalytic burner, so this potential problem is solved. Also, regarding the oxygen distribution, the injection takes place in the catalyst in the present invention, but not in a diverging nozzle or venturi directly or via a lance. Instead of taking advantage of high velocity and turbulence for good mixing disclosed in EP3693338A1, in the present invention a multi-perforated circular or spiral distributor is used. The advantage is to have lower pressure drop, as the catalyst and distributors are located in the big diameter section of the reactor with a much lower gas velocity. Also, the oxygen injection is done directly into the catalyst minimizing even more the auto-ignition delay time, providing more temperature controllability. The multipoint injection system of the present invention also provides a flatter temperature profile along the reactor height, which is not considered in EP3693338A1.

## OBJECT OF THE INVENTION

The object of the present invention is to provide a method for ammonia cracking, the method improving the yield of ammonia cracking while reducing the amount of nitrogen oxides (NOx) produced.

The method of the present invention refers to an ammonia cracking method wherein the step of partial combustion of ammonia and the step of decomposing ammonia are both conducted directly on the catalyst in the same place of the reactor and at the same time. All catalytic reactions are conducted while avoiding flame combustion. This method results in a reaction temperature lower than the temperature of 800-1100°C known from the prior-art, as the reactions occur simultaneously. In addition, it enables a better distribution of ammonia and oxygen and consequently a reduction in the production of NOx gases. The control of a catalytic combustion is easier than a flame combustion, as the catalyst provides additional mass heat capacity which improves the controllability of the temperature and reduces its variations, dampening said variations.

Regarding the catalyst, the method of the present invention does not involve a nickel catalyst which requires temperatures over typically 800 °C to become active. The working temperature of the reaction is around 600 °C to 800 °C, more preferably between 600 °C and 700 °C. This in turn means that less oxygen is needed, reducing the associated costs. The hydrogen yield is also higher for the same reason, as less ammonia is burned.

Recirculating a certain amount of water has beneficial effects to the method because it provides heat capacity that dampens the reaction temperature avoiding fast variations in the reactor while it guarantees that the peak temperature is lower than 700° C. Consequentially, the amount of NOx gases formed is lower. It also reduces the partial pressure of ammonia and other compounds in the reaction favoring the thermodynamics of the reaction (the higher the operating pressure, the higher the temperature required to obtain the same ammonia conversion according to the chemical equilibrium). It is also necessary to control its dosage between 0.2 and 1.2 $kgH_2O/kgNH_3$, because if the amount of water introduced is too high, it can have some detrimental effects, such as reducing the efficiency of heat exchanges, taking up space resulting in larger equipment, etc. In its right relation it is very beneficial, but its relative quantity must be controlled with respect to the ammonia fed to the cracker, which is easy to do since it is done with a pump and a flow control.

Also, oxygen injection is done through specially designed distributors. The distributor is a multi-perforated circular or spiral distributor which enables oxygen injection in a more distributed manner inside the reactor. A second oxygen injection, dividing the total oxygen flow in two, will reduce the temperature peak of the first injection, providing a flatter temperature profile along the reactor.

The oxygen injection is done directly into the catalyst minimizing even more the auto-ignition delay time, providing more temperature controllability. When more than one distributor is present a multipoint injection system is established. The multipoint injection system of the present invention provides a flatter temperature profile along the reactor height, also reducing the maximum temperature.

Downstream the reactor the hydrogen is separated in a PSA unit preferably.

The off gas from this separation, very rich in nitrogen and with a very low heating value is sent to a catalytic burner, where it is burned, and the heat is recovered to vaporize the ammonia-water inlet flow.

**SUMMARY**

The present application relates to a method for ammonia cracking characterized by comprising the steps of:

> (i) Introducing a mixture of ammonia and water in a single chamber autothermal reactor (1) comprising at least one non-nickel-based catalytic bed (28) with a non-nickel-based catalyst;
> (ii) Introducing oxygen in the single chamber autothermal reactor (1) via at least one oxygen inlet (36) of the reactor (1) and through at least one distributor (32) that contacts the catalytic bed (28) or is embedded in the catalytic bed (28);
> (iii) Controlling the temperature of the reaction at the catalytic bed (28) by adjusting the oxygen flow of the reactor;

wherein the temperature in the single chamber autothermal reactor (1) is kept below 600-800 °C.

In one embodiment the temperature of the reaction is controlled below 600-800 °C with water by adjusting the ratio between water and ammonia.

In one embodiment the ratio of the ammonia and water mixture is from 0.2 $kgH_2O/kgNH_3$ to 1.2 $kgH_2O/kgNH_3$.

In one embodiment the oxygen flow is from 0.05 $kgO_2/kgNH_3$ to 0.25 $kgO_2/kgNH_3$.

In one embodiment the single chamber autothermal reactor (1) is an adiabatic fixed bed single chamber reactor arranged in a cylindrical envelope body (27) made of metal alloy comprising the catalytic bed (28), at least one ammonia and water inlet (25), at least one oxygen inlet (36) and a non-return valve (37) arranged in the at least one oxygen inlet (36).

In one embodiment the oxygen distributor (32) is a ring with perforations having different sizes and angles along the circumference.

In one embodiment the oxygen distributor (32) is a spiral ring comprising at least one perforated loop, the perforations having different sizes and angles along the spiral.

In one embodiment the catalyst bed (28) is of the random type, structured, monolithic or layered.

In one embodiment the catalyst is Ruthenium-based.

In one embodiment the single chamber autothermal reactor (1) comprises a product outlet (34) and a mesh (35).

The application also relates to a high-pressure auto-thermal system for cracking ammonia and producing hydrogen and nitrogen, comprising:

> (a) an ammonia auto-thermal cracking unit (1) suitable for ammonia auto-thermal cracking and hydrogen production,
> (b) a hydrogen separation unit (2) based on a Pressure Swing Adsorption (PSA) unit,
> (c) a boiler unit (3) suitable for the catalytic combustion of residual combustible gases, and (d) a water dosing unit (4), characterized in that:
>
> - the auto-thermal reforming unit (1) is an adiabatic fixed bed single chamber reactor arranged in a cylindrical envelope body (27) made of metal alloy, the reactor comprising at least one catalytic bed (28) with a non-nickel-based catalyst, at least one ammonia and water inlet (25), at least one oxygen inlet (36), a non-return valve (37) arranged in the oxygen inlet (36), at least one distributor (32) located in the cylindrical envelope body (27) and in contact with the catalyst or is embedded in the catalyst; and
> - the boiler unit (3) comprises a heat exchanger suitable for heat recovery; and
> - the water dosing unit (4) comprises a pump and flow control means.

In one embodiment the catalytic bed (28) is of the random type, structured, monolithic or layered.

In one embodiment the catalyst is Ruthenium-based.

In one embodiment the oxygen distributor (32) is a ring with perforations having different sizes and angles along the circumference.

In one embodiment the oxygen distributor (32) is a spiral ring spiral ring comprising at least one perforated loop, the perforations having different sizes and angles along the spiral.

**DESCRIPTION OF THE DRAWINGS**

For clarity and understanding of the object of the present invention, the following figures are presented:

Figure 1: Flow diagram of a small production unit

Figure 2: Flow diagram of a large production unit

Figure 3A: Auto-thermal single chamber reactor (temperature probe located on the side)

Figure 3B: Auto-thermal single chamber reactor (temperature probe located on the side) with two oxygen injections

Figure 4: Auto-thermal single chamber reactor (thermowell arranged in vertical position)

Figure 5A: Multi-perforation circular distributor (lateral view)

Figure 5B: Multi-perforation circular distributor (side view)

Figure 5C: Multi-perforation circular distributor (top view)

Figure 5D: Multi-perforation circular distributor (rear view)

Figure 6A: Multi-perforation spiral distributor (top view)

Figure 6B: Multi-perforation spiral distributor (side-left view)

Figure 6C: Multi-perforation spiral distributor (side-right view)

Figure 7: Working temperature profile

Figure 8A: Oxygen concentration profile 3D view

Figure 8B: Oxygen concentration profile view at distribution height (transversal view)

Figure 8C: Oxygen concentration profile view 1mm under the distributor (transversal view)

Figure 9: Brief description of the process

## DETAILED DESCRIPTION OF THE INVENTION

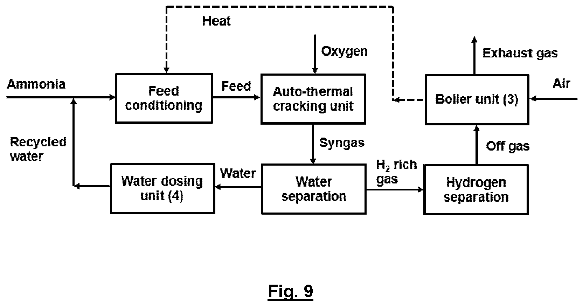

The method of the invention is briefly described in Figure 9. In a first aspect, the present invention provides a high-pressure auto-thermal system for cracking ammonia producing hydrogen and nitrogen, comprising (a) an ammonia auto-thermal cracking unit (1) for ammonia auto-thermal cracking and hydrogen production, (b) a hydrogen separation unit (2) based on a pressure swing adsorption (PSA) unit, (c) a boiler unit (3) suitable for the catalytic combustion of residual combustible gases, and (d) a water dosing unit (4), characterized in that:

- the auto-thermal reforming unit (1) is an adiabatic fixed bed single chamber reactor arranged in a cylindrical envelope body (27) made of metal alloy, the reactor comprising catalytic bed (28) with a non-nickel-based catalyst, at least one ammonia and water inlet (25), at least one oxygen inlet (36), at least one distributor (32) located in the cylindrical envelope body (27) that is in contact with the catalytic bed (28)or is embedded in the catalytic bed (28); and
- the boiler unit (3) is a catalytic burner suitable to provide catalytic combustion where combustible gases are burned and comprises a heat exchanger suitable for heat recovery; and
- the water dosing unit (4) comprises a pump and flow control means.

A further embodiment of the present invention is that the catalyst used in the high-pressure auto-thermal system described above is a non-nickel alloy. Preferably, the catalyst used in the high-pressure auto-thermal system described above is a Ruthenium-based catalyst.

A further embodiment of the present invention is that the combustible gases of the high-pressure auto-thermal system described above are hydrogen and ammonia, with inert gas as nitrogen and water.

A further embodiment of the present invention is that the auto-thermal cracking unit (1) comprises a product outlet (34) and a mesh (35).

A further embodiment of the present invention is that the auto-thermal cracking unit (1) comprises a non-return valve (37) arranged in the at least one oxygen inlet (36).

A further embodiment of the present invention is that the oxygen distributor (32) of the auto-thermal cracking unit (1) is a ring with perforations with different sizes and angles along the circumference, for small units.

A further embodiment of the present invention is that the oxygen distributor (32) of the auto-thermal cracking unit (1) is a spiral ring with perforations with different sizes and angles along the spiral, for bigger units. This design covers all the reactor transversal area through the spiral allowing free dilatation when operating at high temperature with no stress problems.

The main process takes place in the auto-thermal cracking unit (1) which corresponds to an auto-thermal cracking of the ammonia and, therefore, all the hydrogen production. The unrecovered hydrogen is burned in the boiler unit (3) in order to increase the energetic efficiency of the system.

The catalyst is not based on nickel but in Ruthenium and the bed may be of the random type (in particles of all shapes and sizes), structured, monolithic or layered.

The system according to the present invention generates the required hydrogen with a purity suitable for feeding a fuel cell.

The auto-thermal cracking unit (1) has at least one oxygen distributor located inside the catalytic bed (28). Optionally, the auto-thermal cracking unit (1) can have a second oxygen distributor, located inside the catalytic bed (28). The oxygen is dosed in two entrances, dividing its flow, and controlling it in each entrance through adequate flow control devices. This provides a better temperature control along the catalytic bed, flattering its longitudinal profile. The oxygen distributor shape is discussed previously.

Optionally oxygen separation membranes could be used, integrated inside the autothermal reactor, providing oxygen all along the bed. Using this option will allow a controlled combustion all along the catalyst bed (28), as well as acting as air separator, intensifying the process.

The method taking place in the auto-thermal cracking unit (1), the hydrogen separation unit (2), the boiler unit (3) and the water dosing unit (4) are described in detail below:

**Auto-thermal cracking unit (1)**

In the auto-thermal reaction unit (1) the heat required to maintain optimum conditions for the cracking reaction is generated by the partial oxidation and combustion of the ammonia.

Ammonia cracking: $2\,NH_3 \rightarrow 3\,H_2 + N_2$

$$2\,NH_3 + \frac{3}{2}\,O_2 \rightarrow N_2 + 3\,H_2O$$

Ammonia combustion:

Ammonia cracking is a high endothermic, energy-absorbing reaction, where the products have higher energy than the reactants. This heat input must be constantly supplied since otherwise the cracking reaction would stop. The required heat is supplied in the reactor itself by the partial oxidation and combustion of the ammonia. These reactions, unlike the previous one, are very exothermic, they release heat. Exothermic and endothermic reactions take place on the same equipment and on the same catalyst. It is called partial oxidation because not all the ammonia is combusted, otherwise the cracking reaction could not take place. More or less ammonia will be consumed in the oxidation reaction depending on the oxygen quantity supplied. Thus, by controlling the amount of oxygen entering the reactor, the temperature in the reactor will be controlled. In this unit, other chemical reactions can take place, as it is the NOx formation, that are undesired side reactions, very dependent on operating temperature. Also, deNOx reactions, that will eliminate the previously formed NOx will take place once all the oxygen is consumed, helped by the remaining ammonia.

The catalyst is not based in nickel because nickel-based catalysts require a high temperature and could not operate in an efficient way in autothermal catalytic conditions, as the nickel will be oxidized to nickel oxide, less active towards cracking. The catalyst is based on Ruthenium with other elements, which provides enough activity to have the same conversion operating at lower temperature. This saves oxygen, reduces the temperature and the NOx generation, and leaves more ammonia to crack, increasing the hydrogen yield.

Furthermore, the catalyst used is very poorly selective towards NOx formation reactions and very active towards DeNOx reactions. The NOx formation reactions are listed below:

Thermal NO formation: $O + N_2 \rightarrow NO + N$ ; $N + O_2 \rightarrow NO + O$

Thermal $NO_2$ formation: $NO + H + O_2 \rightarrow NO_2 + OH$

Fuel NOx formation (not adjusted): $NH_3 + O_2 \rightarrow NO + NO_2$

The main DeNOx reactions are:

$$2\,NO + 2\,NH_3 + \frac{1}{2}\,O_2 \rightarrow 2\,N_2 + 3\,H_2O$$

$$NO_2 + 2\,NH_3 + \frac{1}{2}\,O_2 \rightarrow \frac{3}{2}\,N_2 + 3\,H_2O$$

$$NO + NO_2 + 2\,NH_3 \rightarrow 2\,N_2 + 3\,H_2O$$

$$6\,NO + 4\,NH_3 \rightarrow 5\,N_2 + 6\,H_2O$$

$$6\,NO_2 + 8\,NH_3 \rightarrow 7\,N_2 + 12\,H_2O$$

In the interior of the auto-thermal cracking unit (1), in the first centimeters of the catalytic bed the temperature will be higher since the partial oxidation and the combustion of the ammonia are faster reactions and are exothermic. For this reason, the temperature in these first centimeters can reach 700 °C. A Ruthenium based catalyst is to be used so that the temperature profile could have a near flat profile, thus the temperature is always below 700 °C along the reforming bed, in where the oxidation reactions are slow enough to avoid a high temperature peak. With this catalyst the reactor material of construction and design temperature are more easily affordable. Also, a multipoint oxygen injection system is optionally envisaged to provide an overall lower and flat temperature profile, dividing the combustion reactions along the reactor.

**Hydrogen separation unit (2)**

Hydrogen separation unit, based on a PSA unit, is able to separate hydrogen based on different adsorption forces of the different molecules of the gaseous feed in a porous solid. Hydrogen normally is not adsorbed and passes through the bed, but other substances, such as nitrogen, water and ammonia are adsorbed. When one bed is full of impurities, the feed is sent to other bed for a continuous process and the filled bed is regenerated. This regeneration is produced via decreasing the operating pressure. The adsorbed substances are desorbed at lower pressure, regenerating the bed, but some hydrogen is not recovered that is contained in the bed.
In a preferred embodiment, at least four adsorption beds are used to assure a continuous hydrogen production.
The pressure of the pure hydrogen at the outlet is similar to the one of the feed, subtracting only the pressure losses in the bed. This represents an important advantage over selective hydrogen permeation membranes, that produce the hydrogen at low pressure. The desorbed gas from the PSA is at low pressure and sent to the boiler unit (3).

**Boiler unit (3)**

The boiler unit (3) has two main functions:

- Eliminate the content of combustible gases;
- Increase the energetic efficiency of the process.

The desorbed gases from the hydrogen separation unit (2) contain mainly nitrogen, water, unrecovered hydrogen and a small part of ammonia. This amount of hydrogen is the one that reaches the boiler (3).
In order to burn these gases, it is necessary to incorporate air. As the heating value of this exhaust gas is very low, flame combustion is very difficult to perform. A catalyst is provided in order to burn the low heating value gas. Via catalytic combustion, the total elimination of hydrogen and ammonia is guaranteed. The oxidation reactions of the boiler (3) are significantly exothermic. These reactions are listed below:

Hydrogen combustion: $H_2 + \frac{1}{2}\,O_2 \rightarrow H_2O$

Ammonia combustion: $2\,NH_3 + \frac{3}{2}\,O_2 \rightarrow N_2 + 3\,H_2O$

It is very convenient to use generated heat to increase the energetic efficiency of the system recovering it in a heat exchanger. Thus, the hot exhaust gases from the boiler, composed of nitrogen, oxygen and water, are used for this purpose before sending them to the atmosphere. The recovered heat is used to evaporate the ammonia-water feed.
Little oxygen excess must be always controlled to guarantee the total oxidation of the combustible gases. This oxygen content could be measured at the exhaust gases outlet.
The boiler temperature is controlled with the flow of excess air introduced into the boiler.

**Water dosing unit (4)**

This unit is composed by a water recirculation pump, centrifugal or rotative type (positive displacement), and a flow control system. The flow control system is based on a flow measurement and controller, that could act on a control valve if the pump is a centrifugal type or directly over the pump speed if the pump is rotative type (positive displacement).

In a second aspect, the present invention provides a method for cracking ammonia and producing hydrogen, comprising an ammonia cracking and hydrogen production step in a system of the first aspect of the invention, wherein the pressure at the auto-thermal cracking unit (1) is from 20 to 40 barg and wherein the following steps are carried out in the auto-thermal cracking unit (1):

(a) ammonia is introduced through at least one ammonia and water inlet (25) at a temperature from 300 °C to 650 °C,
(b) oxygen is introduced through at least one oxygen inlet (36) at a temperature from 5 to 50 °C,
(c) water recirculated and mixed with ammonia is introduced in a ratio from 0.2 $kgH_2O/kgNH_3$ to 1.2 $kgH_2O/kgNH_3$ and
(d) oxygen to ammonia flow ranges from 0.05 $kgO_2/kgNH_3$ to 0.25 $kgO_2/kgNH_3$.

**Method for ammonia cracking and hydrogen production**

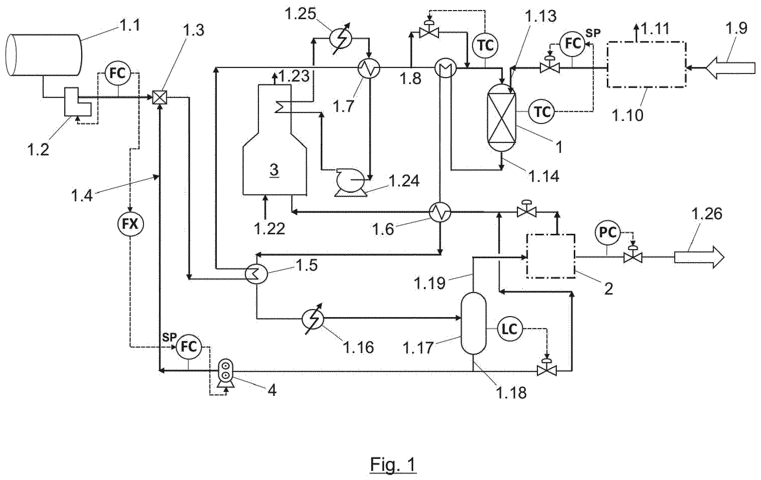

1. PROCESS DESCRIPTION SMALL SCALE NH3 CRACKING - The process for small scale units according to the invention is described below (Figure 1):

Auto-thermal reaction will be carried with the combination of the reagents ammonia and oxygen at high temperature and pressure in a catalytic bed contained in an adiabatic reactor.

1.1 Ammonia and water mixture preparation

Liquid ammonia is stored in the ammonia storage tank (1.1), under ambient temperature and pressurized (Pressure=8-10 barg). Liquid ammonia is pumped at a pressure of 20-40 barg with the ammonia feed pump (1.2) which is a positive displacement pump, and sent to the static mixer (1.3). In the static mixer (1.3), liquid ammonia is mixed with the liquid water from stream condensed in the end of the process (1.4). Adding water to the ammonia helps controlling the temperature in the auto-thermal reactor.

The flow of ammonia will be directly controlled acting over the capacity of the pump (1.2) to achieve the required capacity of the plant. The flow of water will be controlled with a ratio controller, so that water is adjusted to the ammonia flow to keep a determined ratio.

The mixture of liquid ammonia and water mixture is heated to the required temperature at the inlet of reactor in a series of heat exchangers. First, it is heated in the feed preheater (1.5), using as hot fluid the stream going out from the flue gas feed effluent heat exchanger (1.6). Then it is heated and evaporated in the evaporator (1.7), using as hot fluid a closed loop of pressurized boiler feed water; this closed loop is heated with the exhaust gases from the burner in a catalytic boiler (3).

The vaporized mixture of ammonia/water is heated finally in the reactor feed-effluent heat exchanger (1.8), that is using as hot fluid the direct outlet of the auto-thermal reactor.

1.2 Oxygen preparation

An oxygen enriched stream will be prepared from the ambient air (1.9) using a vacuum swing adsorption system (1.10) oxygen generator or a PSA depending on the plant capacity. Oxygen concentration will be in the range of 90-75% vol. The nitrogen separated from the air will be sent back to the atmosphere in a nitrogen enriched stream (1.11). Oxygen flow will be adjusted to maintain the desired temperature in the autothermal reactor (1).

1.3 Autothermal reaction

Ammonia and water mixture is introduced at the inlet of the autothermal reactor (1). Oxygen (1.13) is introduced in the autothermal reactor (1) into the catalytic bed, touching it. The presence of catalyst, oxygen and ammonia creates the initiation of ammonia combustion reaction which raises the temperature (exothermic reaction) of the mixture in the first part of the bed. Ammonia cracking reaction takes place in the first part as well as over the remaining height of bed (endothermic reaction).

Temperature at the catalytic bed is controlled with the adjustment of oxygen flow (1.13) to the reactor. A catalyst with very low NOx activity and low combustion temperature is preferred in order to provide a "near flat" temperature profile in the bed. Also, a multipoint oxygen injection system could optionally be used, as well as oxygen separation membranes integrated inside the reactor.

1.4 Heat recovery

Gases exiting (1.14) from the autothermal reactor (1) will be used to recover energy. First, the gas is sent to the feed-effluent heat exchanger (1.8) where it is used to heat ammonia and water mixture. After that, the gas is sent to the flue gas feed effluent heat exchanger (1.6), where they are used to heat gases that are going to be burned in the burner and boiler (3). Then gases are sent to the feed preheater (1.5), where they are used to preheat the mixture of ammonia and water.

1.5 Condensation and separation

After recovering heat from the flue gas, it is cooled down with cooling water so that water with unreacted ammonia is separated from the stream. This is done in the condenser (1.16). A bi-phasic stream of liquid and gas in sent to the separator (1.17), where liquid (water and unreacted ammonia) is separated in the bottom (1.18) and gas (hydrogen, nitrogen and some ammonia traces) is separated through the top part (1.19).

Part of the liquid phase is pumped by the reaction water dosing unit (4) and sent to the static mixer (1.3), as described above. To control level in the separator (1.17), excess water is drained and mixed with the non-recovered gas from the PSA hydrogen separation unit (2) and sent to combustion in the feed preheater (1.6). With this small cracker size, it is considered more convenient to vaporize and burn the ammonia traces than separating the ammonia from this aqueous stream. The gas stream is a pressure of 20-40 barg and will be used to recover hydrogen.

1.6 Hydrogen separation

The gas stream (1.19) from the separator (1.17), composed mainly by hydrogen and nitrogen, will be sent to the PSA hydrogen separation unit (2). This unit will be a pressure swing separation unit, where the hydrogen will be separated from the nitrogen and sent to the final user. Pressure in the total system will be controlled though the rate of hydrogen extraction after the PSA.

1.7 Flue gas combustion

After separating hydrogen (1.26) from the gas stream in the PSA hydrogen separation unit (2), the flue gas is composed mainly of nitrogen, some traces of ammonia and water and a low fraction non recovered hydrogen. The flue gas, although with a low heating value, will be burned to recover energy. This will be done in the burner and boiler (3). The burning process takes place in a catalytic burner. The burner and boiler (3) will have two sections. In the first section, air (1.22) will be introduced to burn the non-recovered flue gas in the presence of a catalyst. In the second section, the hot fumes of the combustion will exchange heat (1.23) with the boiler feed water (BFW) closed loop in a boiler.

1.8 BFW Closed loop

A closed loop of boiler feed water is circulated to recover energy from exhaust fumes that will be used to vaporize the ammonia and water mixture. BFW is pumped by the pump (1.24) and sent to the recovery section of the burner and boiler (1.15), where the water is heated and partially evaporated. The mixture of liquid water and steam is sent to the attemperator (1.25), where part of the steam is condensed to control the pressure of the closed loop. Then, the resulting stream is sent to the evaporator (1.7) where all steam is condensed using the heat to vaporize the ammonia and water mixture. This loop is provided to give more controllability for small units. Direct evaporation of the ammonia and water mixture in the boiler (3) is to be considered for bigger units.

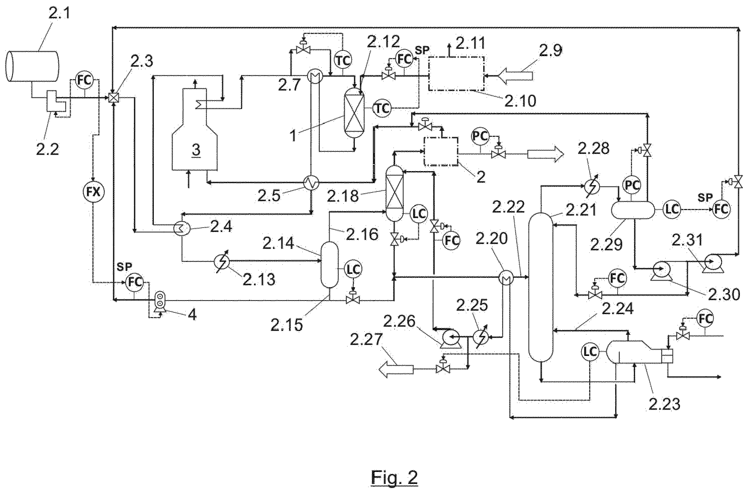

2. PROCESS DESCRIPTION LARGE SCALE NH3 CRACKING - The process for large scale units according to the invention is described below (Figure 2):

2.1 Ammonia and water preparation

Liquid ammonia is stored in the ammonia storage tank (2.1), under room temperature and pressurized (Pressure=8-10 barg). Liquid ammonia is pumped at a pressure of 20-40 barg with feed pump (2.2) which is a positive displacement pump and sent to the static mixer (2.3). In the static mixer (2.3), liquid ammonia is mixed with the liquid water stream condensed in the end of the cracking process. Adding water to the ammonia helps controlling the temperature increase in the auto-thermal reactor. The flow of ammonia will be directly controlled acting over the capacity of the pump (2.2) to achieve the required capacity of the plant. The flow of water will be controlled with a ratio controller, so that water is adjusted to the ammonia flow. The mixture of liquid ammonia and water mixture is heated to the temperature required at the inlet of reactor in a series of heat exchangers. First, it is heated in the feed preheater (2.4), using as hot fluid the stream going out from the flue gas feed effluent heat exchanger (2.5). Then it is heated and evaporated in the top part of the burner and boiler (3), using the heat contained in the hot fumes of the burning section. The vaporized mixture of ammonia and water is heated finally in the reactor feed-effluent heat exchanger (2.7), that is using as hot fluid the direct outlet of the autothermal reactor (3).

### 2.2 Oxygen preparation

An oxygen enriched stream will be prepared from the ambient air (2.9) using a vacuum swing adsorption system (VSA) oxygen generator (2.10). For big capacities of the plant, cryogenic distillation units could be more economical than VSA units. Oxygen concentration will be in the range of 90-75% vol for VSA, and almost pure for cryogenic distillation. The nitrogen (2.11) separated from the air will be sent back to the atmosphere in a nitrogen enriched stream. Oxygen flow will be adjusted to maintain the desired temperature in the autothermal reactor (1).

### 2.3 Autothermal reaction

A mixture of ammonia and water is introduced at the inlet of the autothermal reactor (1). Oxygen (2.12) is introduced in the autothermal reactor (1) into the catalytic bed, touching it. The presence of catalyst, oxygen and ammonia creates the initiation of ammonia combustion reaction which raises the temperature (exothermic reaction) of the mixture in the first part of the bed. Ammonia cracking reaction takes place in the first part as well as over the remaining height of bed (endothermic reaction). Temperature at the inlet section of the bed is controlled with the adjustment of oxygen flow to the reactor.

Also, a multipoint oxygen injection system could optionally be used, as well as oxygen separation membranes integrated inside the reactor.

### 2.4 Heat recovery

Gases exiting from the autothermal reactor (1) will be used to recover energy. First, the gas is sent to the reactor feed-effluent heat exchanger (2.7) where it is used to heat the gaseous ammonia and water mixture. After that, the gas is sent to the flue gas feed effluent heat exchanger (2.5), where they are used to heat gases that are going to be burned in the burner and boiler (3). Then gases are sent to the feed preheater (2.4), where they are used to preheat the liquid mixture of ammonia and water.

### 2.5 Condensation and separation

After recovering heat from the flue gas, it is cooled down with cooling water so that water with some unreacted ammonia is separated from the stream. This is done in the condenser (2.13). A bi-phasic stream of liquid and gas in sent to the separator (2.14), where liquid water and unreacted ammonia, in liquid form, is separated in the bottom (2.15) and hydrogen, nitrogen and some ammonia traces, in gaseous form, is separated through the top part (2.16). Part of the liquid phase is pumped by the reaction water dosing unit (4) and sent to the static mixer (2.3), as described above. To control the level in the separator (2.14), excess water is drained and sent to the distillation section. The gas stream is at a pressure of 20-40 barg and will be sent to the water cleaning tower (2.18), that is packed tower. In it, water is flowing downwards and gas from separator is flowing upwards. Water is used to absorb and recover ammonia traces, so that gas is finally clean of ammonia. Water and ammonia solution collected in the bottom of the water cleaning tower (2.18) is sent to the distillation section.

### 2.6 Hydrogen separation

The gas stream from the water cleaning tower (2.18), already cleaned of ammonia and composed mainly by hydrogen and nitrogen, will be sent to the PSA hydrogen separation unit (2). This unit will be a pressure swing separation unit, where the hydrogen will be separated from the nitrogen and sent to the final user. Pressure in the total system will be controlled through the rate of hydrogen extraction after the PSA.

### 2.7 Flue gas combustion

After separating hydrogen from the gas stream in the PSA hydrogen separation unit (2), the flue gas is composed mainly of nitrogen, and a low fraction non recovered hydrogen. There is also a gaseous stream of non-condensable gases coming from distillation section. Both streams will be mixed and sent to be burned in the burner and boiler (3). After being mixed, the resulting gaseous stream is heated in the flue gas feed effluent heat exchanger (2.5), which is using the gas coming from autothermal reaction as hot fluid. Once heated, mixture is sent to the burner and boiler (3). The burner and boiler (3) will have two sections. In the first section, air will be introduced to burn the gases in the presence of a catalyst. In the second section, the hot fumes of the combustion will exchange heat to vaporize the ammonia and water mixture.

2.8 Ammonia distillation

Water with ammonia traces is drained from the separator (2.14) and the water cleaning tower (2.18). This section will recover ammonia from both streams so that it can be returned to the process. Both streams from the separator (2.14) and the water cleaning tower (2.18) are mixed and heated in the distillation column feed effluent heat exchanger (2.20), which is using the heat of the bottom stream of distillation tower (2.21). The heated stream is introduced in the middle section (2.22) of the distillation tower (2.21). The distillation tower (2.21) is heated in the bottom by the column reboiler (2.23), where most of the bottom product, mainly water, is evaporated and returned (2.24) to the distillation tower (2.21). Part of the bottom product is extracted from the distillation system. This extracted water is sent to the distillation column feed effluent heat exchanger (2.20) where it transfers its heat content to the feed of the distillation column. Then is it cooled down in the absorption water cooler (2.25) where it is refrigerated with cooling water. Finally, it is pumped by the absorption water recirculation pump (2.26) and sent to the water cleaning tower (2.18) to be used as absorption water. A fraction is extracted from the system as water purge (2.27).
The top part of the distillation tower (2.21) is refrigerated by the column condenser (2.28), using cooling water as cold fluid. The fluid condensed in the column condenser (2.28) is a mixture of water and ammonia and is accumulated in the reflux accumulator (2.29). The liquid from the reflux accumulator (2.29) is pumped by the reflux pump (2.30) and sent back to distillation tower as reflux recycle. A part of the ammonia is pumped by the ammonia recirculation pump (2.31) and sent to the static mixer (2.3), so that it can be reprocessed in autothermal reactor. Non-condensable gases are extracted from the reflux accumulator (2.29) with a pressure control that avoids pressure build up. This non-condensable stream is mixed with the non-recovered gas from the PSA hydrogen separation unit (2) and sent to the burner and boiler (3) for treatment.

**EXEMPLARY EMBODIMENT**

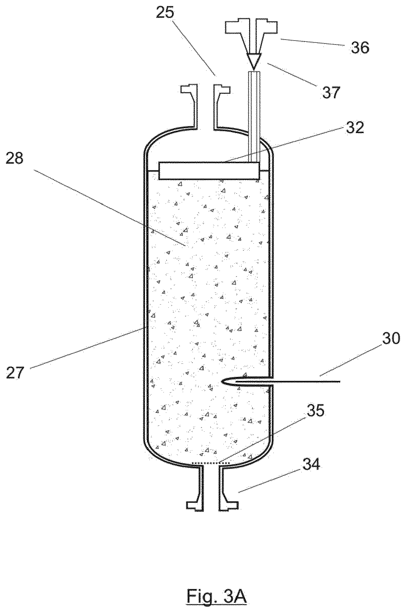

**High-pressure auto-thermal system for cracking ammonia and producing hydrogen that contains an auto-thermal cracking unit (1), depicted in Figures 3A.**

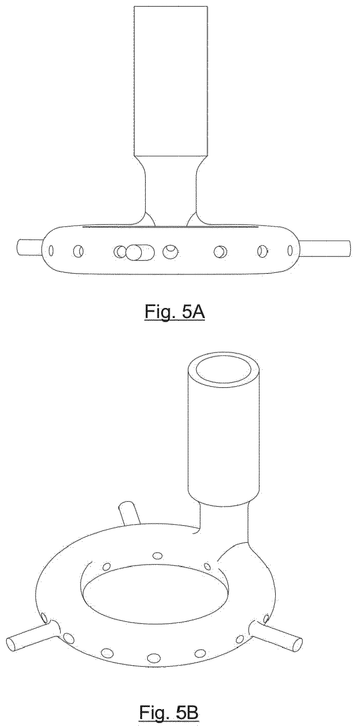

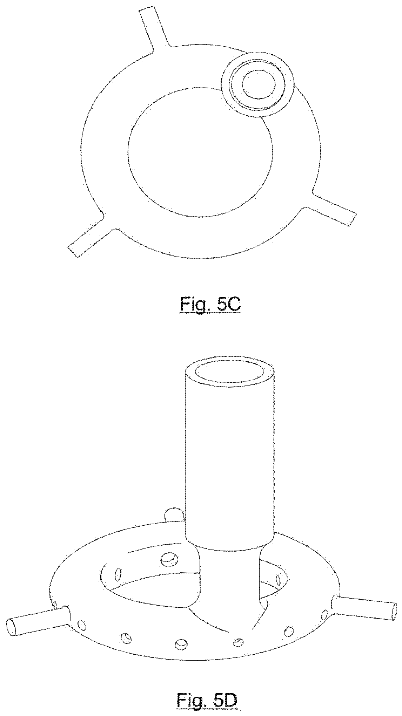

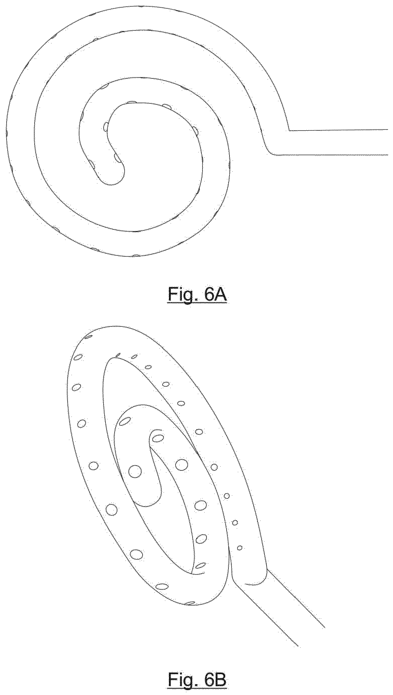

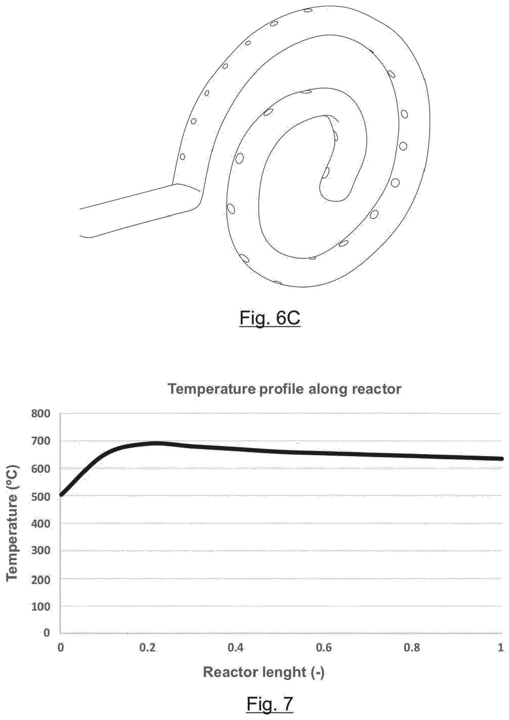

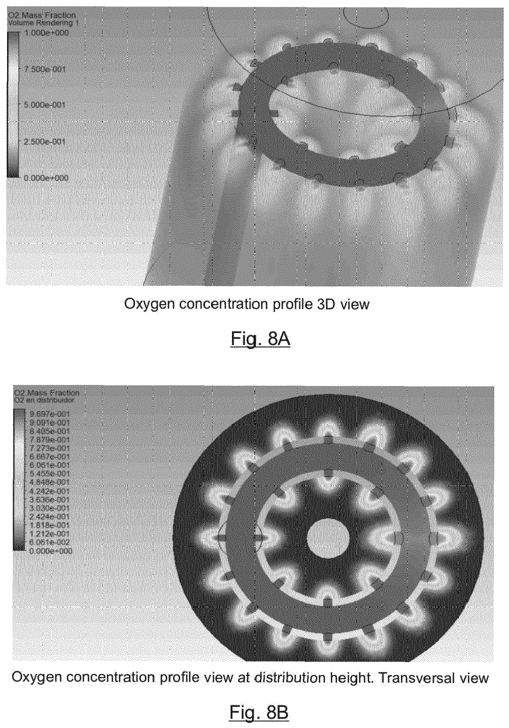

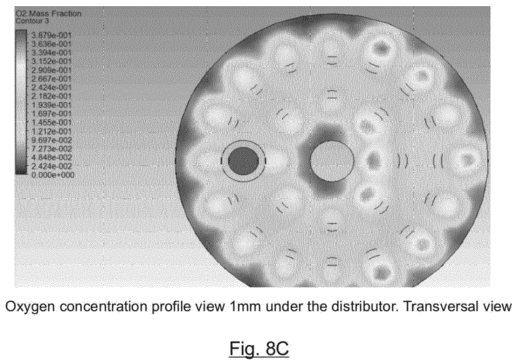

The auto-thermal cracking unit (1) is a single auto-thermal adiabatic fixed-bed reactor designed as a cylindrical envelope body (27) disposed in a vertical or horizontal arrangement. The gas flow is arranged through the cylinder envelope body (27) going downwards. Finally, the gas mixture leaves the reactor at the bottom (34). The high peak temperature produced by the partial oxidation/combustion reactions of the ammonia (faster kinetic reactions) is avoided by the use of a catalyst based on Ruthenium and other elements that provides slow kinetics for combustion reactions as well as having a certain amount of steam in the inlet gas (25). A typical temperature profile along the catalytic bed (28) can be observed in Figure 7. This allows the reduction of the wall thickness of the vessel and not to use interior refractory lining. Affordable materials of construction are possible, making the solution very cost attractive. The use of interior refractory insulation entails a considerable diameter increase. A catalyst located inside the envelope body (27) and an inlet of ammonia and steam is located at the top part (25) being made at about 300 to 650 °C.
An oxygen distributor (32) in the form of a perforated ring (Figures 5A, 5B, 5C and 5D) for small units or perforated spiral (Figures 6A, 6B and 6C) for big units where the oxygen is dosed. The sizes of the perforations are defined to have a good oxygen distribution in a sectional view, being smaller near the oxygen inlet and bigger at the end as long as the pressure drops inside the distributor. Said system does not have dead volumes and distributes the oxygen homogeneously in all the section of the reactor (Figures 8A, 8B and 8C). The spiral distributor has the extra feature of allowing thermal dilatations with no stress problems. The spiral size and number of turns are different depending on the reactor section. If the reactor section is bigger the spiral will have more than one loop, covering all the reactor section. The spiral also has perforations along the tube for the oxygen to be dosed. These perforations are smaller near the inlet and bigger at the final part of the spiral for good oxygen flow distribution. The distributor is located in the catalyst surface or even within the catalyst (only few centimeters depth) to provide always catalytic combustion and avoiding flame combustion. The self-ignition delay time is less than a second in the operating conditions. If the distributor is located within the first centimeters of bed, the catalyst particles located above will act as radiation shield preventing excessive temperature increase of the ammonia and steam gas inlet. The distributor (32) is located in the full-size section or the envelope body (27) to have very low pressure drop avoiding high velocity flows. The distributor (32) could be manufactures of metal alloys from mechanization or tubes or via 3D metal printing to control the position, angle and size of every perforation for perfect oxygen dosing through said distributor.

An oxygen inlet (36) at higher pressure than the process, at 5 °C to 50 °C approximately. The amount of oxygen dosed is controlled by the temperature measured in the catalytic bed (28) and in the outlet of the autothermal reforming unit (1). The passage of combustible gas to the oxygen side is not allowed, as this is introduced at higher pressure. In addition, an anti-return valve (37) is provided at the oxygen inlet to prevent back flow.

Temperature probes (30) protected by thermowells arranged along the reactor to monitor and control the behavior of the equipment at all times under the proper operating conditions.

A product outlet (34) placed at the bottom of the reactor with a mesh (35) located in a nozzle with holes of adequate size to prevent dragging of the catalyst but allowing the free flow of the fluid.

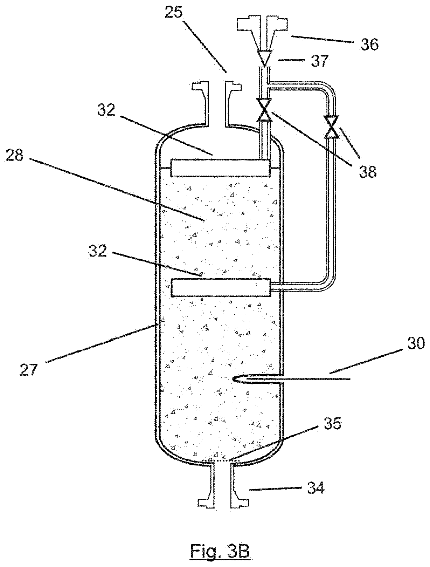

**High-pressure auto-thermal system for cracking ammonia and producing hydrogen that contains an auto-thermal reforming unit (1), depicted in Figure 3B.**

The auto-thermal cracking unit (1) described in Figure 3B comprises the elements described in the auto-thermal cracking unit (1) described in Figure 3A, with the exception of the following modifications.

The oxygen dosing is done via at least one oxygen inlet (36) of the reactor. Each oxygen inlet has a flow measurement and controller acting over a control valve element (38) as well as a distributor (32).

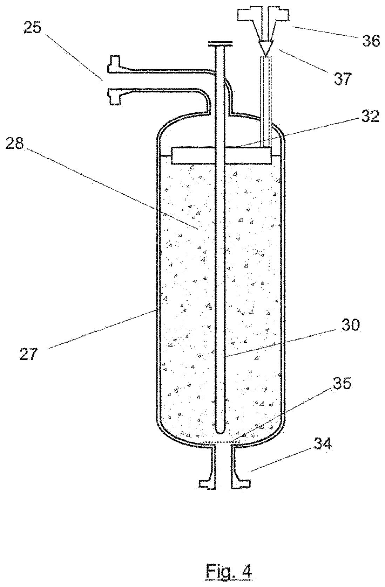

**High-pressure auto-thermal system for cracking ammonia and producing hydrogen that contains an auto-thermal cracking unit (1), depicted in Figure 4.**

The auto-thermal cracking unit (1) described in Figure 4 comprises the elements described in the auto-thermal cracking unit (1) described in Figure 3A, with the exception of the following modifications. The temperature probes (30) used to measure the inner temperature inside the envelope (27) are replaced by a thermowell arranged in vertical position. It allows the use of multi-point temperature sensors distributed along the thermowell, allowing an easier way to access temperature readings.

**Claims**

1. A method for ammonia cracking **characterized by** comprising the steps of:

    (i) Introducing a mixture of ammonia and water in a single chamber autothermal reactor (1) comprising at least one non-nickel-based catalytic bed (28) with a non-nickel-based catalyst;
    (ii) Introducing oxygen in the single chamber autothermal reactor (1) via at least one oxygen inlet (36) of the reactor (1) and through at least one distributor (32) that contacts the catalytic bed (28) or is embedded in the catalytic bed (28);
    (iii) Controlling the temperature of the reaction at the catalytic bed (28) by adjusting the oxygen flow of the reactor;

    wherein the temperature in the single chamber autothermal reactor (1) is kept below 600-800 °C.

2. The method according to claim 1 wherein the temperature of the reaction is controlled below 600-800 °C with water by adjusting the ratio between water and ammonia.

3. The method according to claim 1-2 wherein the ratio of the ammonia and water mixture is from 0.2 $kgH_2O/kgNH_3$ to 1.2 $kgH_2O/kgNH_3$.

4. The method according to any of the claims 1-3 wherein the oxygen flow is from 0.05 $kgO_2/kgNH_3$ to 0.25 $kgO_2/kgNH_3$.

5. The method according to any of the claims 1-4 wherein the single chamber autothermal reactor (1) is an adiabatic fixed bed single chamber reactor arranged in a cylindrical envelope body (27) made of metal alloy comprising the catalytic bed (28), at least one ammonia and water inlet (25), at least one oxygen inlet (36) and a non-return valve (37) arranged in the at least one oxygen inlet (36).

6. The method according to any of the claims 1-5 wherein the oxygen distributor (32) is a ring with perforations having different sizes and angles along the circumference.

7. The method according to any of the claims 1-5 wherein the oxygen distributor (32) is a spiral ring comprising at least one perforated loop, the perforations having different sizes and angles along the spiral.

8. The method according to any of the claims 1-7 wherein the catalyst bed (28) is of the random type, structured, monolithic or layered.

9. The method according to any of the claims 1-8 wherein the catalyst is Ruthenium-based.

10. The method according to any of the claims 1-9 wherein the single chamber autothermal reactor (1) comprises a product outlet (34) and a mesh (35).

11. A high-pressure auto-thermal system for cracking ammonia and producing hydrogen and nitrogen according to the method described in any of the claims 1-10, comprising:

(a) an ammonia auto-thermal cracking unit (1) suitable for ammonia auto-thermal cracking and hydrogen production,
(b) a hydrogen separation unit (2) based on a Pressure Swing Adsorption (PSA) unit,
(c) a boiler unit (3) suitable for the catalytic combustion of residual combustible gases, and (d) a water dosing unit (4), **characterized in that**:

- the auto-thermal reforming unit (1) is an adiabatic fixed bed single chamber reactor arranged in a cylindrical envelope body (27) made of metal alloy, the reactor comprising at least one catalytic bed (28) with a non-nickel-based catalyst, at least one ammonia and water inlet (25), at least one oxygen inlet (36), a non-return valve (37) arranged in the oxygen inlet (36), at least one distributor (32) located in the cylindrical envelope body (27) and in contact with the catalyst or is embedded in the catalyst; and
- the boiler unit (3) comprises a heat exchanger suitable for heat recovery; and
- the water dosing unit (4) comprises a pump and flow control means.

12. The system according to claim 11 wherein the catalytic bed (28) is of the random type, structured, monolithic or layered.

13. The system according to any of the claims 11-12 wherein the catalyst is Ruthenium-based.

14. The system according to any of the claims 11-13 wherein the oxygen distributor (32) is a ring with perforations having different sizes and angles along the circumference.

15. The system according to any of the claims 11-13 wherein the oxygen distributor (32) is a spiral ring spiral ring comprising at least one perforated loop, the perforations having different sizes and angles along the spiral.

Fig. 1

Fig. 2

Fig. 3A

Fig. 3B

Fig. 4

Fig. 5A

Fig. 5B

Fig. 5C

Fig. 5D

Fig. 6A

Fig. 6B

Fig. 6C

Temperature profile along reactor

Fig. 7

Oxygen concentration profile 3D view

Fig. 8A

Oxygen concentration profile view at distribution height. Transversal view

Fig. 8B

Oxygen concentration profile view 1mm under the distributor. Transversal view

Fig. 8C

**Fig. 9**

Europäisches
Patentamt

European
Patent Office

Office européen
des brevets

# EUROPEAN SEARCH REPORT

Application Number

EP 23 38 2137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/167840 A1 (MIYAGAWA HIROSHI [JP] ET AL) 5 July 2012 (2012-07-05) * paragraphs [0014], [0025], [0049] – [0054], [0057], [0059], [0061], [0062], [0067] – [0069], [0084], [0086] – [0090], [0093]; figures 1, 4-6 * | 1-15 | INV. C01B3/04 B01D53/047 B01J4/00 B01J19/00 B01J23/46 C01B3/56 |
| A,D | EP 3 693 338 A1 (SENER ING & SIST [ES]) 12 August 2020 (2020-08-12) * paragraphs [0074] – [0078], [0081], [0083], [0085]; figure 1 * | 11-15 | |
| A | US 2014/105816 A1 (GRANNELL SHAWN [US] ET AL) 17 April 2014 (2014-04-17) * paragraphs [0002], [0047] – [0054], [0058], [0060], [0061], [0066]; figure 8 * | 1-15 | |
| A | US 2005/037244 A1 (GOETSCH DUANE A [US] ET AL) 17 February 2005 (2005-02-17) * paragraphs [0014], [0027], [0028], [0035], [0036] * | 1-15 | TECHNICAL FIELDS SEARCHED (IPC) C01B B01J B01D |

The present search report has been drawn up for all claims

| Place of search | Date of completion of the search | Examiner |
|---|---|---|
| Munich | 6 July 2023 | Werner, Håkan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 38 2137

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2023

| Patent document cited in search report | | Publication date | Patent family member(s) | | Publication date |
|---|---|---|---|---|---|
| US 2012167840 | A1 | 05-07-2012 | CN | 103249668 A | 14-08-2013 |
| | | | EP | 2660193 A1 | 06-11-2013 |
| | | | JP | 5830035 B2 | 09-12-2015 |
| | | | JP | WO2012090739 A1 | 05-06-2014 |
| | | | US | 2012167840 A1 | 05-07-2012 |
| | | | WO | 2012090739 A1 | 05-07-2012 |
| EP 3693338 | A1 | 12-08-2020 | EP | 3693338 A1 | 12-08-2020 |
| | | | WO | 2020160935 A1 | 13-08-2020 |
| US 2014105816 | A1 | 17-04-2014 | NONE | | |
| US 2005037244 | A1 | 17-02-2005 | AU | 6306901 A | 26-11-2001 |
| | | | EP | 1286914 A1 | 05-03-2003 |
| | | | US | 2002028171 A1 | 07-03-2002 |
| | | | US | 2005037244 A1 | 17-02-2005 |
| | | | WO | 0187770 A1 | 22-11-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019038251 A1

- EP 3693338 A1